# EUROPÄISCHE PATENTSCHRIFT

(11) **EP 2 428 380 B1**
(45) Veröffentlichungstag und Bekanntmachung des Hinweises auf die Patenterteilung: **21.06.2017**
(21) Anmeldenummer: 11007216.2
(22) Anmeldetag: 06.09.2011
(51) Int. Cl.: B60J 7/185, E05B 81/20, E05B 83/00

(54) **Verschlusseinrichtung**
Locking device
Dispositif de verrouillage

(30) Priorität: 08.09.2010 DE 102010044702
(43) Veröffentlichungstag der Anmeldung: 14.03.2012
(73) Patentinhaber: Magna Car Top Systems GmbH, 74321 Bietigheim-Bissingen (DE)
(72) Erfinder: Blech, Christof, 71272 Renningen (DE); Wilke, Gunnar, 49434 Neuenkirchen-Vörden (DE)
(74) Vertreter: Völger, Silke Beatrix

(56) Entgegenhaltungen:
- EP-A2- 1 072 456
- EP-A2- 1 529 908
- DE-A1-102008 003 880
- DE-A1-102008 008 747
- US-A1- 2004 021 339
- US-B1- 6 315 336

## Beschreibung

Die vorliegende Erfindung betrifft eine Verschlusseinrichtung für ein Verdeck eines Fahrzeugs, mit den Merkmalen des Oberbegriffs des Anspruchs 1. Außerdem betrifft die Erfindung ein mit einem Verdeck und wenigstens einer solchen Verschlusseinrichtung ausgestattetes Fahrzeug.

Aus der DE 103 00 882 A1 ist eine Verschlusseinrichtung für ein Verdeck bekannt, die einen Verschlusshaken aufweist, der vorne ein Greifende und hinten ein Lagerende aufweist. In einem Gehäuse der Verschlusseinrichtung ist das Lagerende des Verschlusshakens in einer Längsrichtung des Verschlusshakens horizontal verstellbar gelagert. Ferner umfasst die Verschlusseinrichtung eine Antriebseinrichtung zum Verstellen des Verschlusshakens, die bei der bekannten Verschlusseinrichtung zwei parallel wirkende, beiderseits des Verschlusshakens angeordnete Vierlenkergetriebe umfasst. Bei der bekannten Verschlusseinrichtung erstrecken sich sämtliche Schwenkachsen der beteiligten Lenker horizontal, wodurch die Verschlusseinrichtung in der Vertikalrichtung vergleichsweise viel Bauraum benötigt, um die Kinematik der Lenker zu ermöglichen.

Die bekannte Verschlusseinrichtung ist außerdem mit einer Sensorik zum Erkennen einer Schließstellung und einer Offenstellung des Verschlusshakens ausgestattet. Hierzu ist an Lenkern des einen Vierlenkergetriebes jeweils ein horizontal vorstehender Absatz ausgeformt, der mit einem am Gehäuse fest angeordneten Mikroschalter zusammenwirkt.

Weitere Verschlusseinrichtungen, bei denen ein Verschlusshaken ein in der Längsrichtung verstellbares hinteres Lagerende aufweist, sind beispielsweise aus der DE 102 05 144 B4, aus der EP 0 488 494 A1 und aus der DE 103 52 488 B3 bekannt.

Andere Verschlusseinrichtungen, bei denen der Verschlusshaken an seinem hinteren Lagerende um eine horizontale Schwenkachse schwenkverstellbar am Gehäuse gelagert ist, sind beispielsweise aus der DE 199 64 066 A1, aus der EP 0 309 065 A2, aus der DE 41 11 646 A1, aus der EP 0 879 723 B1, aus der DE 199 44 615 A1 und aus der DE 101 05 771 A1 bekannt.

Weitere Verschlusseinrichtungen mit einer Positionserkennungssensorik sind aus der EP 1 640 200 B1 und aus der DE 199 09 489 B4 bekannt. Aus anderen Bereichen der Technik sind ebenfalls Positionserkennungssensoren bekannt, wie zum Beispiel aus der DE 197 02 833 A1, aus der DE 44 19 179 A1, aus der DE 198 54 181 A1, aus der DE 196 03 964 A1 und aus der DE 196 01 948 A1.

Aus der DE 10 2008 003 880 B4 ist ein Verschluss für ein bewegliches Dach bekannt, wobei sich der Verschlusshaken in einer Kulisse horizontal bewegt, wobei eine Drehung um ein Lager erfolgt, die durch Zahnradelemente und ein Betätigungsglied ausgelöst wird.

Die Erfindung beschäftigt sich mit dem Problem, für eine derartige Verschlusseinrichtung eine verbesserte Ausführungsform anzugeben, die sich insbesondere durch eine hohe Zuverlässigkeit auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Verschlusshaken mit seinem Lagerende nicht unmittelbar am Gehäuse verstellbar zu lagern, sondern die Antriebseinrichtung mit einer Kopplungseinrichtung auszustatten, über welche die Lagerung des Verschlusshakens am Gehäuse erfolgt. Hierzu ist die Kopplungseinrichtung mit dem Lagerende des Verschlusshakens antriebsverbunden, wobei an der Kopplungseinrichtung das Lagerende des Verschlusshakens um eine quer zur Längsrichtung des Verschlusshakens verlaufende, horizontale Schwenkachse verschwenkbar gelagert ist und wobei die Kopplungseinrichtung am Gehäuse in der Längsrichtung des Verschlusshakens horizontal verstellbar gelagert ist. Durch die Verwendung einer derartigen Kopplungseinrichtung wird die horizontale Verstellbarkeit des Lagerendes relativ zum Gehäuse von der Schwenkverstellbarkeit des Verschlusshakens um die horizontale Schwenkachse entkoppelt, so dass jede Lagerung für sich ausgelegt werden kann und hinsichtlich ihrer Funktion optimiert werden kann. Somit kann beispielsweise eine besonders stabile und insbesondere sicher geführte horizontale Verstellbarkeit der Kopplungseinrichtung am Gehäuse realisiert werden, während gleichzeitig eine präzise Schwenklagerung des Verschlusshakens an der Kopplungseinrichtung realisierbar ist. Insbesondere können beide Freiheitsgrade besonders leichtgängig ausgeführt werden, was eine erhöhte Funktionssicherheit für die Verschlusseinrichtung bewirkt.

Gemäß der Erfindung ist die Kopplungseinrichtung als Kreuzkopf ausgestaltet, der einen Kreuzträger und eine Welle aufweist. Am Kreuzträger ist das Lagerende des Verschlusshakens um die horizontale Schwenkachse verschwenkbar gelagert. Die Welle ist um eine vertikale Schwenkachse am Kreuzträger verschwenkbar gelagert und ist mit der Antriebseinrichtung antriebsverbunden. Über diese vertikale Welle erfolgt somit die Antriebsverbindung zwischen Antriebseinrichtung und Kopplungseinrichtung, um die Kopplungseinrichtung relativ zum Gehäuse horizontal verstellen zu können. Die Bezeichnungen "Kreuzkopf" bzw. "Kreuzträger" deuten dabei an, dass die horizontale Schwenkachse, um welche der Verschlusshagen an der Kopplungseinrichtung bzw. am Kreuzträger verschwenkbar gelagert ist, und die vertikale Schwenkachse, um welche die vertikale Welle am Kreuzträger verschwenkbar gelagert ist, im Wesentlichen senkrecht zueinander verlaufen. Eine derartige Kreuz-Konfiguration zeichnet sich durch einen extrem kompakten Aufbau aus.

Entsprechend der Erfindung weist die Kopplungseinrichtung zumindest einen Schlitten auf, während das Gehäuse zumindest eine Führungsschiene besitzt, die sich horizontal in der Längsrichtung des Verschlusshakens erstreckt und in welcher der jeweilige Schlitten der Kopplungseinrichtung verstellbar ist. Hierdurch wird eine Schlittenführung realisiert, die reibungsarm und mit hoher Zuverlässigkeit arbeitet. Gemäß der Erfindung ist die vertikale Welle des Kreuzkopfs am oder im jeweiligen Schlitten um die jeweilige vertikale Schwenkachse verschwenkbar gelagert oder ist die vertikale Welle bezüglich des jeweiligen Schlittens drehfest, wobei dann der jeweilige Schlitten um die jeweilige vertikale Schwenkachse am Gehäuse verschwenkbar gelagert ist. Als Option kann vorgesehen sein, dass die vertikale Welle den jeweiligen Schlitten durchsetzt und an einer vom Kreuzträger abgewandten Seite mit der Antriebseinrichtung antriebsverbunden ist.

Hierdurch ist der Kreuzträger mit dem daran gelagerten Verschlusshaken einerseits der Führungsschiene angeordnet, während die Antriebseinrichtung andererseits der Führungsschiene über die vertikale Welle mit dem Kreuzkopf gekoppelt ist. Dies erhöht die Stabilität der Schlittenführung. Darüber hinaus kann optional vorgesehen sein, die vertikale Welle mit dem jeweiligen Schlitten integral aus einem Stück herzustellen.

Bei einer vorteilhaften Ausführungsform kann das Gehäuse zwei vertikal voneinander beabstandete Platten aufweisen, zwischen denen die Kopplungseinrichtung horizontal verstellbar angeordnet ist. Die Führungsschiene ist dann in einer solchen Platte ausgebildet. Das Gehäuse besitzt dadurch einen vergleichsweise einfachen Aufbau. Besonders vorteilhaft ist nun eine Weiterbildung, bei welcher zwei Führungsschienen vorgesehen sind, die parallel zueinander in jeweils einer der Platten ausgebildet sind. Hierdurch ergibt sich eine besonders stabile Schlittenführung, sofern die Kopplungseinrichtung mit zwei Schlitten ausgestattet ist, die jeweils mit einer dieser Führungsschienen zusammenwirken.
Bei einer anderen vorteilhaften Ausführungsform kann das Gehäuse vorne eine nach unten offene Austrittsöffnung für den Verschlusshaken aufweisen, durch welche der Verschlusshaken zumindest mit seinem Greifende aus dem Gehäuse herausragt. Durch diese Bauweise kann der Verschlusshaken mit seinem Greifende beim Übergang von seiner Offenstellung in seine Schließstellung ein entsprechendes Gegenstück, wie zum Beispiel einen Bügel, von unten ergreifen und dann nach hinten ziehen.
Entsprechend einer anderen vorteilhaften Ausführungsform kann die Antriebseinrichtung zumindest ein Zweilenkergetriebe, den mit dem Zweilenkergetriebe antriebsverbundenen Antriebslenker und einen Stellantrieb zum Antreiben des Antriebslenkers aufweisen. Das Zweilenkergetriebe weist seinerseits einen vorderen Lenker, der vorne um eine vordere Vertikalachse schwenkbar am Gehäuse verschwenkbar gelagert ist, sowie einen hinteren Lenker auf, der hinten über eine Kopplungseinrichtung mit dem Lagerende des Verschlusshakens antriebsverbunden ist sowie um eine hintere vertikale Schwenkachse an der Kopplungseinrichtung verschwenkbar gelagert ist. Darüber hinaus sind die beiden Lenker des Zweilenkergetriebes zwischen ihren Schwenkachsen um eine weitere oder mittlere vertikale Schwenkachse aneinander verschwenkbar gelagert, wobei der Antriebslenker an einem der Lenker des Zweilenkergetriebes zwischen dessen Schwenkachsen um eine weitere vertikale Schwenkachse verschwenkbar gelagert ist. Durch die Verwendung vertikaler Schwenkachsen für den Antriebslenker und die beiden Lenker des Zweilenkergetriebes baut die Verschlusseinrichtung in der Vertikalrichtung vergleichsweise kompakt, wodurch sich eine flache Bauform realisieren lässt. Gleichzeitig bilden die beiden Lenker des Zweilenkergetriebes ein Kniegelenk, das über den Antriebslenker angetrieben ist und das im gestreckten Zustand, insbesondere für die Schließstellung des Verschlusshakens, besonders hohe Kräfte auf den Verschlusshaken übertragen kann. Dies vereinfacht die Realisierung eines ausreichend dimensionierten Stellantriebs und erhöht die Sicherheit der Verschlusseinrichtung in der Schließstellung des Verschlusshakens.

Insbesondere kann bei einer anderen Ausführungsform die Antriebseinrichtung ein zweites Zweilenkergetriebe aufweisen, das beabstandet zum anderen oder ersten Zweilenkergetriebe am oder im Gehäuse angeordnet ist. Zweckmäßig erstrecken sich die vorderen vertikalen Schwenkachsen, die hinteren vertikalen Schwenkachsen und die mittleren vertikalen Schwenkachsen bei beiden Zweilenkergetrieben jeweils koaxial zueinander bzw. fallen zusammen. Besonders zweckmäßig ist dabei eine Variante, bei der die vorderen Lenker der beiden Zweilenkergetriebe koaxial zur vorderen Schwenkachse und/oder die hinteren Lenker der beiden Zwellenkergetriebe koaxial zur hinteren Schwenkachse drehfest miteinander verbunden sind. Hierdurch ergibt sich eine besonders stabile Abstützung der Kopplungseinrichtung über die beiden Zweilenkergetriebe am Gehäuse, wodurch eine besonders zuverlässige Verstellbarkeit der Kopplungseinrichtung relativ zum Gehäuse realisierbar ist.

Entsprechend einer vorteilhaften Ausführungsform kann der Stellantrieb einen Kurbeltrieb zum Antreiben des Antriebslenkers aufweisen, dessen Kurbel um eine zur Kurbel exzentrische vertikale Drehachse drehverstellbar ist, wobei der Antriebslenker distal zum Zweilenkergetriebe an der Kurbel um eine zur Kurbel koaxiale vertikale Schwenkachse verschwenkbar gelagert ist. Durch diesen vertikal drehenden Kurbeltrieb wird ebenfalls wenig Bauraum in der Vertikalrichtung benötigt, was die flache Bauweise der Verschlusseinrichtung unterstützt. Ferner kann mit Hilfe eines derartigen Kurbeltriebs eine vergleichsweise große Kraftübertragung auf den Antriebslenker und somit auf das Zweilenkergetriebe realisiert werden, was die Betriebszuverlässigkeit der Verschlusseinrichtung unterstützt.

Entsprechend einer anderen vorteilhaften Ausführungsform kann der Stellantrieb einen Motor und ein damit antriebsgekoppeltes Getriebe aufweisen, wobei ein Abtrieb des Getriebes den Kurbeltrieb antreibt oder bildet. Besonders vorteilhaft ist dabei eine Welterbildung, bei welcher das Getriebe als Planetengetriebe ausgestaltet ist, dessen Sonnenrad mit dem Motor antriebsverbunden ist und dessen Planetenradträger oder dessen Hohlrad den Abtrieb bildet, der den Kurbeltrieb antreibt oder bildet. Insbesondere kann außerdem die Antriebsverbindung zwischen einer Abtriebswelle des Motors und dem Sonnenrad des Planetengetriebes über ein Schneckengetriebe erfolgen, so dass die Rotorachse des Motors quer zu den Drehachsen des Planetengetriebes verlaufen kann.

Gemäß einer anderen vorteilhaften Ausführungsform können die Lenker des Zweilenkergetriebes in einer Schließstellung des Verschlusshakens eine Übertotpunktstellung einnehmen. Das Kniegelenk ist in dieser Übertotpunktstellung überdrückt, so dass Zugkräfte am Verschlusshaken nunmehr Zugkräfte auf den Antriebslenker übertragen, während zum Verstellen des Verschlusshakens in die Offenstellung Druckkräfte von den Lenkern des Zweilenkergetriebes auf den Antriebslenker übertragen werden müssten. Insofern ergibt sich durch die Übertotpunktstellung eine Selbstsperrung des Zweilenkergetriebes in der Schließstellung des Verschlusshakens.

Bei einer anderen vorteilhaften Ausführungsform kann die Antriebseinrichtung ein zweites Zweilenkergetriebe aufweisen, das beabstandet zum anderen oder ersten Zweilenkergetriebe am oder im Gehäuse angeordnet ist. Zweckmäßig fallen bei beiden Zweilenkergetrieben die jeweiligen vorderen vertikalen Schwenkachsen und die jeweiligen hinteren vertikalen Schwenkachsen und die jeweiligen mittleren vertikalen Schwenkachsen jeweils zusammen, so dass sich identische Kinematiken ergeben. Die vorderen Lenker der beiden Zweilenkergetriebe können dann zweckmäßig koaxial zur vorderen Schwenkachse und drehfest miteinander verbunden sein. Zusätzlich oder alternativ können die hinteren Lenker der beiden Zweilenkergetriebe koaxial zur hinteren Schwenkachse drehfest miteinander verbunden sein. Durch die beiden parallel wirkenden und die Kopplungseinrichtung parallel antreibenden Zweilenkergetriebe kann die Zuverlässigkeit der Verschlusseinrichtung deutlich verbessert werden, da quasi ein von Kippmomenten freier horizontaler Antrieb der Kopplungseinrichtung realisierbar ist.

Entsprechend einer besonderen Weiterbildung können die vorderen Lenker der beiden Zweilenkergetriebe jeweils drehfest an einer gemeinsamen vorderen Welle angeordnet sein, die um die vordere Schwenkachse am Gehäuse verschwenkbar gelagert ist. Zusätzlich oder alternativ können die hinteren Lenker der beiden Zweilenkergetriebe jeweils drehfest an einer gemeinsamen hinteren Welle angeordnet sein, die um die hintere Schwenkachse an der Kopplungseinrichtung verschwenkbar gelagert ist. Die Verwendung einer gemeinsamen Welle erleichtert die drehfeste Kopplung zwischen den beiden Lenkern.

Entsprechend einer anderen Weiterbildung kann das Gehäuse zwei vertikal voneinander beabstandete Platten aufweisen, zwischen denen das Lagerende des Verschlusshakens horizontal verstellbar angeordnet ist. Die beiden Zweilenkergetriebe können dann an zwei voneinander abgewandten Außenseiten der beiden Platten angeordnet sein. Hierdurch ergibt sich eine besonders stabile Abstützung der Zweilenkergetriebe am Gehäuse einerseits und der Kopplungseinrichtung am Gehäuse andererseits.

Eine andere vorteilhafte Ausführungsform zeichnet sich durch eine Sensorik zum Erkennen einer Schließstellung und einer Offenstellung des Verschlusshakens aus, wobei insbesondere vorgesehen sein kann, dass die Antriebseinrichtung einen Antriebslenker und einen Kurbeltrieb zum Antreiben des Antriebslenkers aufweist, wobei der Kurbeltrieb eine um eine vertikale Drehachse drehverstellbare und zur Drehachse exzentrisch angeordnete Kurbel aufweist, die mit dem Antriebslenker antriebsverbunden ist. Die zuvor genannte Sensorik kann nun im Bereich dieses Kurbeltriebs angeordnet sein, um damit zum Erkennen der Schließstellung und der Offenstellung des Beschlusshakens zusammenzuwirken.

Entsprechend einer vorteilhaften Ausführungsform kann der Kurbeltrieb eine um die Drehachse drehverstellbare Scheibe aufweisen, an der die Kurbel angeordnet ist. Die Sensorik umfasst nun eine an der Scheibe drehfest angeordnete Schaltkulisse sowie zumindest zwei Schalter, die in der Umfangsrichtung der Scheibe voneinander beabstandet ortsfest am Gehäuse angeordnet sind. Die Schaltkulisse und die Schalter sind dabei so aufeinander abgestimmt, dass die Schaltkulisse in der Schließstellung des Verschlusshakens den einen Schalter und in der Offenstellung des Verschlusshakens den anderen Schalter betätigt. Die vorgeschlagene Bauweise zeichnet sich durch eine geometrisch einfache Struktur aus, die außerdem eine vergleichsweise hohe Zuverlässigkeit gewährleistet.

Zweckmäßig kann die Schaltkulisse axial an der Scheibe angeordnet sein. In der Folge kann die Schaltkulisse axial an die Scheibe angebaut werden, während die Scheibe beispielsweise einen integralen Bestandteil des Kurbeltriebs bildet, also separat von der Schaltkulisse hergestellt werden kann. Beispielsweise kann dadurch die Scheibe umfangsmäßig von einem Gehäuse des Kurbeltriebs eingefasst sein,

Bei einer anderen vorteilhaften Ausführungsform kann die Schaltkulisse zwischen ihren Umfangsenden radial außen eine kreisbogenförmige Außenkontur aufweisen, von welcher die Umfangsenden radial nach außen vorstehen. Die Schalter sind am Gehäuse dann so positioniert, dass das eine Umfangsende der Schaltkulisse in der Schließstellung des Verschlusshakens den einen Schalter betätigt, während das andere Umfangsende der Schaltkulisse in der Offenstellung des Verschlusshakens den anderen Schalter betätigt. Über den Umfangsabstand der beiden Umfangsenden sowie über den Umfangsabstand der beiden Schalter lässt sich der Winkelbereich, in dem die Scheibe und somit auch die Kurbel verdreht werden muss, um den Verschlusshaken zwischen der Schließstellung und der Offenstellung zu verstellen, relativ genau einstellen.

Bei einer vorteilhaften Ausgestaltung kann das jeweilige Umfangsende über eine Rampenkontur in die krelsbogenförmige Außenkontur übergehen. Dies vereinfacht die Betätigung des jeweiligen Schalters. Zusätzlich oder alternativ kann die kreisbogenförmige Außenkontur gegenüber einer kreisförmigen Außenkontur der Scheibe koaxial und radial nach innen versetzt angeordnet sein. Durch diese Bauweise kann eine Störkontur an der Scheibe vermieden werden, die beispielsweise mit einer anderen Komponente des Kurbeltriebs kollidieren könnte. Zweckmäßig kann außerdem vorgesehen sein, dass die Umfangsenden der Schaltkulisse radial außen bündig mit der Scheibe abschließen. Auch diese Bauform reduziert die Gefahr von Störkonturen, die beispielsweise mit einem Gehäuse des Kurbeltriebs kollidieren könnten.

Gemäß einer anderen vorteilhaften Ausführungsform kann die Schaltkulisse sichelförmig ausgestaltet sein und der Kurbel bezüglich der Drehachse gegenüberliegend an der Scheibe angeordnet sein. Somit kann vorteilhaft der an der Scheibe vorhandene Bauraum zur Unterbringung der Schaltkulisse genutzt werden. Besonders zweckmäßig ist dann eine Weiterbildung, bei welcher der Antriebslenker in der Schließstellung vertikal über der Schaltkulisse angeordnet ist. Die Formgebung des Antriebslenkers bzw. die Anbindung des Antriebslenkers an der Kurbel erfolgt daher so, dass die Schaltkulisse unter den Antriebslenker eintauchen kann, ohne mit ihm zu kollidieren.

Entsprechend einer anderen vorteilhaften Ausführungsform kann der Antriebslenker um eine vertikale Schwenkachse verschwenkbar an der Kurbel gelagert sein, wobei der Antriebslenker eine von der Schwenkachse radial abstehende Nase aufweist. Das Gehäuse kann in diesem Fall zweckmäßig mit einem Anschlag ausgestattet sein, an dem die Nase in der Schließstellung des Verschlusshakens zur Anlage kommt. Die am Anschlag anliegende Nase des Antriebslenkers definiert somit die Schließstellung des Verschlusshakens. Da die Schließstellung des Verschlusshakens somit im Bereich der Kurbel definiert ist, arbeitet die im Bereich der Kurbel angeordnete Sensorik besonders genau. Ferner kann die Schaltkulisse optional an einer der Drehachse zugewandten Innenkontur mit einer Ausnehmung ausgestattet sein, in welche die Nase in der Offenstellung des Verschlusshebels eintauchen kann. Hierdurch wird ein kompakter Aufbau realisiert.

Schließlich betrifft die vorliegende Erfindung noch ein Fahrzeug mit einem Fahrzeugverdeck, das zwischen einer Offenstellung und einer Schließstellung verstellbar ist und das in der Schließstellung mittels wenigstens einer Verstelleinrichtung der vorbeschriebenen Art verschlossen ist. Insbesondere kann die Verschlusseinrichtung hierbei verdeckseitig angeordnet sein, so dass der Verschlusshaken mit einem fahrzeugseitigen Haken zusammenwirkt. Beispielsweise ist die Verschlusseinrichtung verdeckseitig an einer Dachkappe des Verdecks angeordnet, die in der Schließstellung des Verdecks an einem oberen Windschutzscheibenrahmen zur Anlage kommt.

Die Begriffe "horizontal" und "vertikal" beziehen sich auf eine typische Einbausituation der Verschlusseinrichtung. Die Segriffe "vorne" und "hinten" beziehen sich auf die Bewegungsrichtung des Verschlusshakens, so dass ein Ausfahren des Verschlusshakens nach vorne erfolgt, während ein Einfahren oder Zurückfahren des Verschlusshakens nach hinten erfolgt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine teilweise geschnittene Seitenansicht einer Verschlusseinrichtung in einer Schließstellung,
- Fig. 2: eine teilweise geschnittene Seitenansicht der Verschlusseinrichtung in einer Offenstellung,
- Fig. 3: eine Draufsicht der Verschlusseinrichtung in der Schließstellung,
- Fig. 4: eine Draufsicht der Verschlusseinrichtung in einer Zwischenstellung,
- Fig. 5: eine Draufsicht der Verschlusseinrichtung in der Offenstellung.

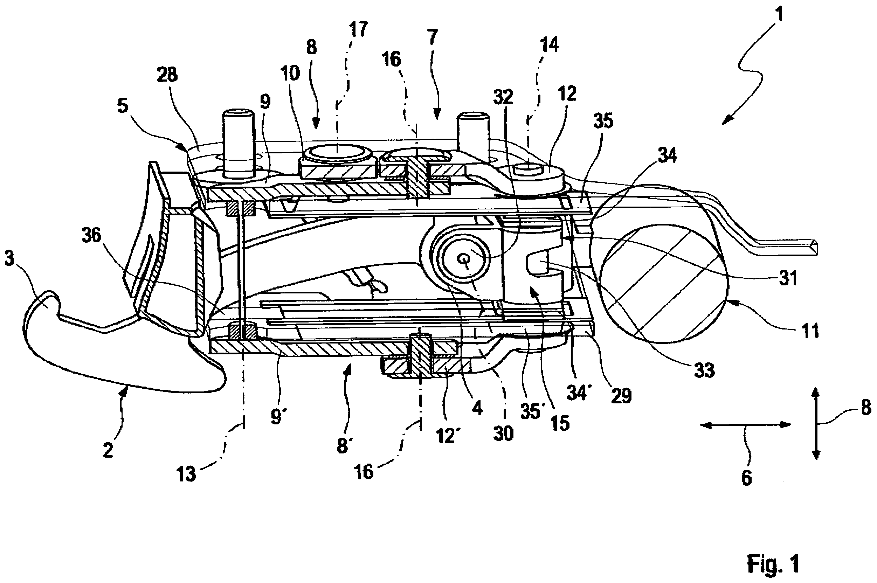

Entsprechend den Figuren 1-5 umfasst eine Verschlusseinrichtung 1, mit deren Hilfe bei einem Fahrzeug ein zwischen einer Offenstellung und einer Schließstellung verstellbares Verdeck in der Schließstellung verschließbar ist, einen Verschlusshaken 2, der vorne, also in den Fig. 1-5 links, ein Greifende 3 und hinten, also in den Fig. 1-5 rechts, ein Lagerende 4 aufweist. Ferner umfasst die Verschlusseinrichtung 1 ein Gehäuse 5, in dem das Lagerende 4 des Verschlusshakens 2 in einer Längsrichtung des Verschlusshakens 2 horizontal verstellbar gelagert ist. Eine Horizontalrichtung 6 ist dabei in den Fig. 1-5 durch einen Doppelpfeil angedeutet. Die Längsrichtung des Verschlusshakens 2 ist dabei durch eine Gerade gebildet, die durch das Greifende 3 und durch das Lagerende 4 hindurchgeführt ist. Es handelt sich also um die Richtung, in welcher sich der Verschlusshaken 2 ausgehend von seinem hinteren Lagerende 4 in Richtung seines vorderen Greifendes 3 erstreckt.

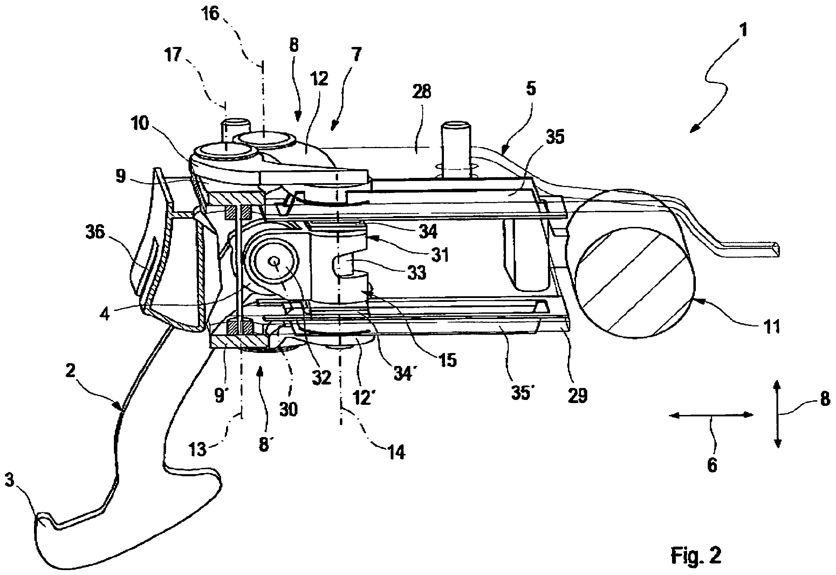

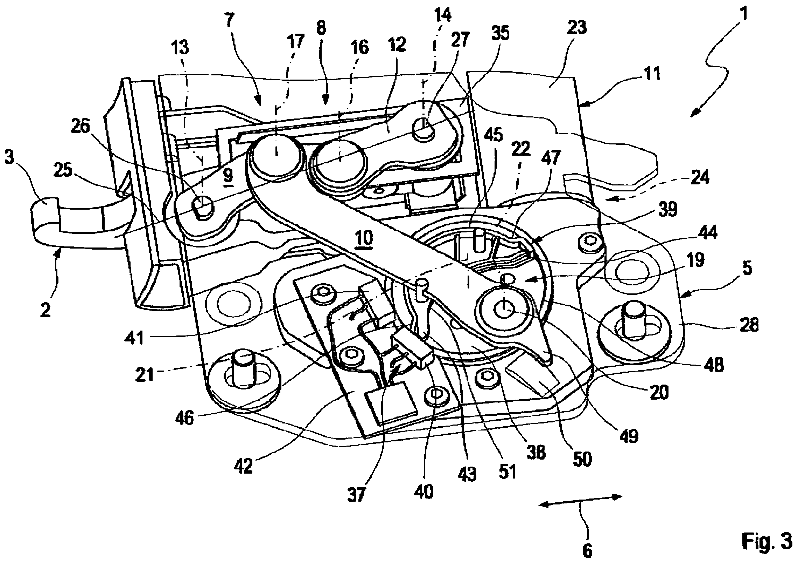

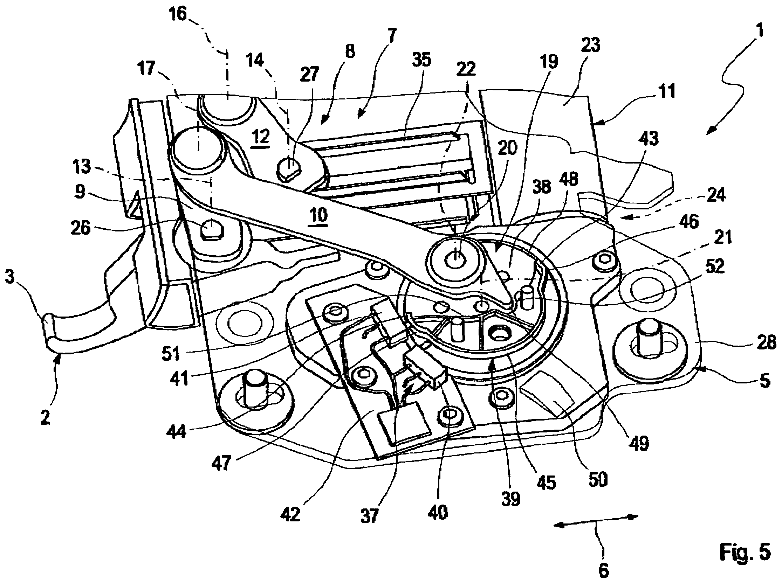

Darüber hinaus umfasst die Verschlusseinrichtung 1 eine Antriebseinrichtung 7, die zum Verstellen des Verschlusshakens 2 zwischen der in den Figuren 1 und 3 gezeigten Schließstellung und der in den Fig. 2 und 5 gezeigten Offenstellung dient.

Die Antriebseinrichtung 7 kann dabei zumindest ein Zweilenkergetriebe 8 aufweisen. Bei der hier gezeigten, bevorzugten Ausführungsform sind zwei derartige Zweilenkergetriebe 8 und 8' vorgesehen, nämlich ein erstes Zweilenkergetriebe 8 und ein zweites Zweilenkergetriebe 8'. Ferner umfasst die Antriebseinrichtung 7 einen Antriebslenker 10, der mit einem der Zwellenkergetriebe 8, hier mit dem ersten Zweilenkergetriebe 8 antriebsverbunden ist, sowie einen Stellantrieb 11 zum Antreiben des Antriebslenkers 10,

Das jeweilige Zweilenkergetriebe 8, 8' weist dabei jeweils einen vorderen Lenker 9, 9' sowie einen hinteren Lenker 12, 12' auf. Der jeweilige vordere Lenker 9, 9' ist dabei vorne um eine vordere vertikale Schwenkachse 13 am Gehäuse 5 verschwenkbar gelagert. Der jeweilige hintere Lenker 12, 12' ist dabei hinten um eine hintere vertikale Schwenkachse 14 an einer Kopplungseinrichtung 15 verschwenkbar gelagert und außerdem über diese Kopplungseinrichtung 15 mit dem Lagerende 4 des Verschlusshakens 2 antriebsverbunden. Des Weiteren sind die beiden Lenker 9, 12 bzw. 9', 12' des jeweiligen Zweitenkergetriebes 8, 8' zwischen ihren Schwenkachsen 13, 14 um eine weitere oder mittlere vertikale Schwenkachse 16 aneinander verschwenkbar gelagert. Hierdurch bilden die beiden Lenker 9, 12 bzw. 9'. 12' des jeweiligen Zweilenkergetriebes 8, 8' jeweils ein Kniegelenk, dessen Knie im Bereich dieser mittleren Schwenkachse 16 liegt. Der Antriebslenker 10 ist nun an einem der Lenker 9, 9', 12, 12' des einen Zweilenkergetriebes 8, 8' zwischen den Schwenkachsen 13, 14, 16 des jeweiligen Lenkers 9, 9', 12, 12' um eine weitere vertikale Schwenkachse 17 verschwenkbar gelagert. Bei der hier gezeigten, bevorzugten Ausführungsform ist der Antriebslenker 10 am vorderen Lenker 9 des ersten Zweilenkergetriebes 8 schwenkbar gelagert, und zwar zwischen der vorderen Schwenkachse 13 und der mittleren Schwenkachse 16.

Eine Vertikalrichtung 18 ist dabei in den Fig. 1-5 durch einen Doppelpfeil angedeutet.

Wie sich insbesondere den Fig. 3-5 entnehmen lässt, kann der Stellantrieb 11 einen Kurbeltrieb 19 aufweisen, mit dessen Hilfe der Stellantrieb 11 den Antriebslenker 10 antreibt. Eine Kurbel 20 des Kurbeltriebs 19 ist dabei um eine Drehachse 21 drehverstellbar, die zur Kurbel 20 exzentrisch angeordnet ist. Der Antriebslenker 10 ist distal zum Zweilenkergetriebe 8, also beabstandet zum Zweilenkergetriebe 8 an der Kurbel 20 um eine vertikale Schwenkachse 22 verschwenkbar gelagert, die sich koaxial zur Kurbel 20 erstreckt. Ferner umfasst der Stellantrieb 11 einen Motor 23, zum Beispiel ein Elektromotor sowie ein damit antriebsgekoppeltes Getriebe 24, das in den Darstellungen der Fig. 1-5 verdeckt bzw. nicht erkennbar ist. Ein Abtrieb des Getriebes 24 treibt den Kurbeltrieb 19 an oder bildet selbst den Kurbeltrieb 19. Beispielsweise kann es sich beim Getriebe 24 um ein Planetengetriebe handeln, dessen Sonnenrad mit dem Motor 23 antriebsverbunden ist, entweder direkt oder zum Beispiel indirekt über ein Schneckengetriebe. Ein Planetenradträger des Planetengetriebes oder ein Hohlrad des Planetengetriebes bilden dabei den zuvor genannten Abtrieb des Getriebes 24, der den Kurbeltrieb 19 bildet oder antreibt.

In der in Fig. 3 gezeigten Schließstellung des Verschlusshakens 2 nehmen die beiden Lenker 9, 12 des in der Draufsicht erkennbaren ersten Zweilenkergetriebes 8 eine übertotpunktstellung ein. In dieser übertotpunktstellung befindet sich die mittlere Schwenkachse 16 an einer dem Kurbeltrieb 19 zugewandten Seite einer gedachten Geraden 25, die sich senkrecht durch die vordere Schwenkachse 13 und die hintere Schwenkachse 14 erstreckt. Außerhalb der Schließstellung befindet sich die mittlere Schwenkachse 16 an einer vom Kurbeltrieb 19 abgewandten Seite dieser gedachten Geraden 25.

Die Antriebseinrichtung 7 kann grundsätzlich mit einem einzigen Zweilenkergetriebe 8 auskommen. Bevorzugt ist jedoch die hier gezeigte Ausführungsform, bei der zwei derartige Zweilenkergetriebe 8, 8' vorgesehen sind. Zweckmäßig sind die beiden Zweilenkergetriebe 8, 8' gleich aufgebaut, jedoch zueinander in der Vertikalrichtung 18 beabstandet am oder im Gehäuse 5 angeordnet. Um die beiden Zweilenkergetriebe 8, 8' miteinander antriebsmäßig zu koppeln, können die beiden vorderen Lenker 9, 9' koaxial zur vorderen Schwenkachse 13 drehfest miteinander verbunden sein. Dies kann beispielsweise mittels einer gemeinsamen vorderen Welle 26 realisiert werden, die sich koaxial zur vorderen Schwenkachse 13 erstreckt und um welche die beiden vorderen Lenker 9, 9' um die vordere Schwenkachse 13 am Gehäuse 5 verschwenkbar gelagert sind. Zusätzlich oder alternativ können die beiden hinteren Lenker 12, 12' koaxial zur hinteren Schwenkachse 14 drehfest miteinander verbunden sein. Dies lässt sich beispielsweise mit Hilfe einer gemeinsamen hinteren Welle 27 realisieren, mit der beide hinteren Lenker 12, 12' drehfest verbunden sind und die sich koaxial zur hinteren Schwenkachse 14 erstreckt. Über diese hintere Welle 27 sind dann die beiden hinteren Lenker 12, 12' um die hintere Schwenkachse 14 verschwenkbar an der Kopplungseinrichtung 15 gelagert.

Bei der hier gezeigten Ausführungsform weist das Gehäuse 5 zwei vertikal voneinander beabstandete Platten 28, 29 auf, zwischen denen das Lagerende 4 des Verschlusshakens 2 horizontal verstellbar angeordnet ist. Zweckmäßig sind die beiden Zweilenkergetriebe 8, 8' an zwei voneinander abgewandten Außenseiten der beiden Platten 28, 29 angeordnet, während das Lagerende 4 des Verschlusshakens 2 an zwei aneinander zugewandten Innenseiten der beiden Platten 28, 29 angeordnet ist.

Die Antriebseinrichtung 7 ist über die Kopplungseinrichtung 15 mit dem Lagerende 4 des Verschlusshakens 2 antriebsverbunden. An dieser Kopplungseinrichtung 15 ist das Lagerende 4 des Verschlusshakens 2 um eine horizontale Schwenkachse 30 verschwenkbar gelagert, die sich quer zur Längsrichtung des Verschlusshakens 2 erstreckt. Ferner ist die Kopplungseinrichtung 15 am Gehäuse 5 in der Längsrichtung des Verschlusshakens 2 horizontal verstellbar gelagert. Somit ist der Verschlusshakens 2 an seinem Lagerende 4 nicht direkt am Gehäuse 5, sondern indirekt über die Kopplungseinrichtung 15 gelagert, und zwar einerseits um die Schwenkachse 30 verschwenkbar und andererseits in der Horizontalrichtung 6 verstellbar.

Entsprechend der hier gezeigten, besonders vorteilhaften Ausführungsform ist die Kopplungseinrichtung 15 als Kreuzkopf ausgestaltet, der im Folgenden ebenfalls mit 15 bezeichnet werden kann. Besagter Kreuzkopf 15 weist einen Kreuzträger 31 auf, an dem das Lagerende 4 des Verschlusshakens 2 um die horizontale Schwenkachse 30 verschwenkbar gelagert ist, Ein entsprechendes Schwenklager ist dabei mit 32 bezeichnet. Ferner weist der Kreuzkopf 15 eine Welle 33 auf, die um die hintere vertikale Schwenkachse 14 am Kreuzträger 31 verschwenkbar gelagert ist und dementsprechend im Folgenden auch als vertikale Welle 33 bezeichnet werden kann. Mit dieser vertikalen Welle 33 ist die Kopplungseinrichtung 15 bzw, der Kreuzkopf 15 mit der Antriebseinrichtung 7 antriebsverbunden. Insbesondere kann diese vertikale Welle 33 die zuvor genannte hintere Welle 27 umfassen, die mit dem jeweiligen hinteren Lenker 12 zur Übertragung von in der Längsrichtung des Verschlusshebels 2 orientierten horizontalen Kräften geeignet ist.

Die Kopplungseinrichtung 15 kann wenigstens einen Schlitten 34 aufweisen. Im Beispiel sind zwei parallel wirkende Schlitten 34 und 34' vorgesehen. Das Gehäuse 5 weist für den jeweiligen Schlitten 34, 34' jeweils eine Führungsschiene 35 bzw. 35' auf. Die jeweilige Führungsschiene 35, 35' erstreckt sich dabei horizontal in der Längsrichtung des Verschlusshakens 2. Ferner ist in der jeweiligen Führungsschiene 35, 35' der zugehörige Schlitten 34 bzw. 34' verstellbar angeordnet. Insbesondere können dabei Schlitten 34, 34' und Führungsschiene 35, 35' eine Gleitverstellbarkeit oder Schiebeverstellbarkeit realisieren, die zweidimensional bzw. bidirektional ausgelegt ist. Ferner ist die vertikale Welle 33 im oder am jeweiligen Schlitten 34, 34' um die jeweilige hintere vertikale Schwenkachse 14 verschwenkbar gelagert. Bei einer alternativen Ausführungsform kann vorgesehen sein, dass die vertikale Welle 33 bezüglich des jeweiligen Schlittens 34, 34' drehfest angeordnet ist, wobei dann der jeweilige Schlitten 34, 34' um die jeweilige hintere vertikale Schwenkachse 14 am Gehäuse 5 verschwenkbar gelagert ist.

Die vertikale Welle 33 bzw. ein die hintere Welle 27 bildender Abschnitt der vertikalen Welle 33 durchsetzt den jeweiligen Schlitten 34, 34' und ist an der vom Kreuzträger 31 abgewandten Seite mit der Antriebseinrichtung 7 antriebsverbunden. Insbesondere ist die hintere Welle 27 integral an der vertikalen Welle 33 ausgeformt. Optional kann außerdem vorgesehen sein, dass die vertikale Welle 33 mit dem jeweiligen Schlitten 34, 34' integral aus einem Stück hergestellt ist.

Sofern wie hier das Gehäuse 5 zwei vertikal voneinander beabstandete Platten 28, 29 aufweist, ist die Kopplungseinrichtung 15 zwischen den beiden Platten 28, 29 horizontal verstellbar angeordnet. Die Führungsschienen 35, 35' sind dabei in den Platten 28, 29 ausgebildet, so dass jede Platte 28, 29 genau eine solche Führungsschiene 35, 35' aufweist. Die beiden Führungsschienen 35, 35' erstrecken sich dabei parallel zueinander und geradlinig.

Das Gehäuse 5 ist vorne mit einer nach unten offenen Austrittsöffnung 36 ausgestattet, durch welche der Verschlusshaken 2 hindurchgeführt ist, derart, dass der Verschlusshaken 2 zumindest mit seinem Greifende 3 aus dem Gehäuse 5 herausragt. Beim Verstellen des Verschlusshakens 2 von der Schließstellung in die Offenstellung wird das
Lagerende 4 von der eingefahrenen hinteren Stellung, die in Fig. 1 erkennbar ist, in eine nach vorn verstellte vordere Stellung überführt, die in Fig. 2 wiedergegeben ist. Hierbei wird der Verschlusshaken 2 durch die Austrittsöffnung 36 nach vorn ausgefahren. Beim Zurückverstellen von der Offenstellung in die Schließstellung wird der Verschlusshaken 2 wieder durch die Austrittsöffnung 36 nach hinten in das Gehäuse 5 eingefahren bzw. zurückgezogen.
Entsprechend den Fig. 3-5 ist die Verschlusseinrichtung 1 außerdem mit einer Sensorik 37 ausgestattet, mit deren Hilfe die Schließstellung und die Offenstellung des Verschlusshakens 2 erkennbar bzw. detektierbar sind. Diese Sensorik 37 wirkt bei der hier gezeigten Verschlusseinrichtung 1 mit dem Kurbeltrieb 19 zusammen. Hierzu sind die Komponenten der Sensorik 37 im Bereich des Kurbeltriebs 19 angeordnet.
Der Kurbeltrieb 19 umfasst eine um die Drehachse 21 drehverstellbare Scheibe 38, an der die Kurbel 20 angeordnet ist. Dabei kann - je nach Kopplung zwischen Kurbel 20 und Antriebshebel 10 - die Kurbel 20 drehfest an der Scheibe 38 angebracht sein.
Ebenso kann die Kurbel 20 um ihre Drehachse 22 drehbar zur Scheibe 38 gelagert sein. Die Sensorik 37 weist eine an der Scheibe 38 drehfest angeordnete Schaltkulisse 39 auf und ist außerdem mit zwei Schaltern, nämlich mit einem ersten Schalter 40 und einem zweiten Schalter 41 ausgestattet. Die beiden Schalter 40, 41 sind in der Umfangsrichtung der Scheibe 38 voneinander beabstandet angeordnet und außerdem bezüglich des Gehäuses 5 ortsfest angeordnet. Beispielsweise sitzen beide Schalter 40, 41 auf einer Schaltungsplatine 42, die am Gehäuse 5 fest angebracht ist, zum Beispiel damit verschraubt ist. Die Schaltkulisse 39 und die Schalter 40, 41 sind so aufeinander abgestimmt, dass die Schaltkulisse 39 die beiden Schalter 40, 41 betätigt. So betätigt die Schaltkulisse 39 in der in Fig. 3 gezeigten Schließstellung des Verschlusshakens 2 den ersten Schalter 40 und in der in Fig. 5 gezeigten Offenstellung des Verschlusshakens 2 den zweiten Schalter 41.
Die Schaltkulisse 39 ist bezüglich der Drehachse 21 axial an der Scheibe 38 angeordnet und ist bei der gezeigten Ausführungsform sichelformig ausgestaltet, so dass sie sich in der Umfangsrichtung der Scheibe 38 erstreckt und dementsprechend zwei Umfangsenden, nämlich ein erstes Umfangsende 43 und ein zweites Umfangsende 44 aufweist. Ferner ist die Schaltkulisse 39 an der Scheibe 38 bezüglich der Drehachse 21 gegenüber der Kurbel 20 angeordnet. Das heißt, die Kurbel 20 und die Schaltkulisse 39 liegen sich an der Scheibe 38 einander bezüglich der Drehachse 21 diametral gegenüber.

Die Schaltkulisse 39 weist zwischen ihren Umfangsenden 43, 44 radial außen z. B. eine kreisbogenförmige Außenkontur 45 auf, von der die Umfangsenden 43, 44 radial nach außen vorstehen. Die Umfangsenden 43, 44 dienen zum Betätigen der Schalter 40, 41. So betätigt das erste Umfangsende 43 in der Schließstellung gemäß Fig. 3 den ersten Schalter 40, während das zweite Umfangsende 44 in der Offenstellung gemäß Fig. 5 den zweiten Schalter 41 betätigt.

Die beiden Umfangsenden 43, 44 können dabei jeweils über eine Rampenkontur 46 bzw. 47 in die kreisbogenförmige Außenkontur 45 übergehen. Die Rampenkonturen 46, 47 erleichtern die Betätigung des jeweiligen Schalters 40, 41. Des Weiteren schließen die Umfangsenden 43, 44 radial außen zweckmäßig bündig mit der Scheibe 38 ab, die eine kreisförmigen Außenkontur 48 aufweist. Dementsprechend ist die kreisbogenförmige Außenkontur 45 der Schaltkulisse 39 gegenüber der kreisförmigen Außenkontur 48 der Scheibe 38 koaxial und radial nach innen versetzt angeordnet.

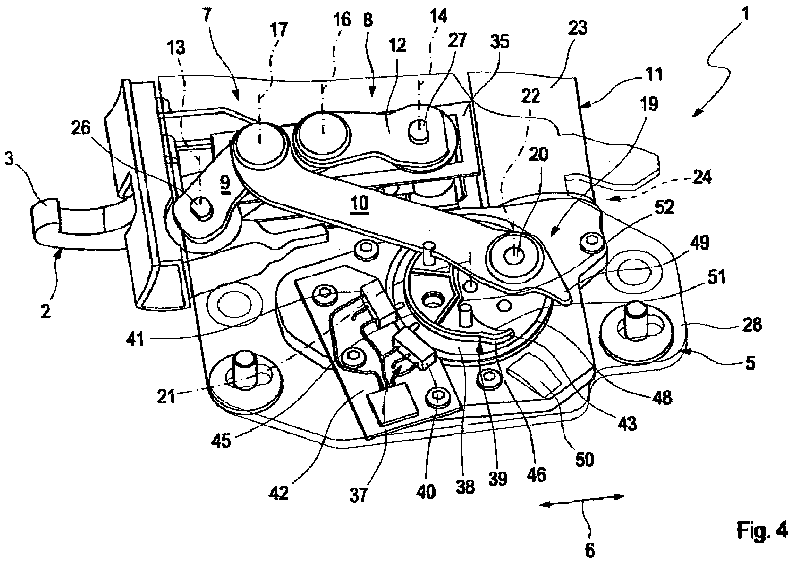

Wie den Fig. 3 und 4 entnehmbar ist, ist die Anbindung zwischen Antriebslenker 10 und Kurbel 20 so gestaltet, dass die Schaltkulisse 39 unter dem Antriebslenker 10 einfahrbar ist. Beispielsweise ist der Antriebslenker 10 hierzu abgekröpft, um einen vertikalen Abstand zwischen Antriebslenker 10 und Schaltkulisse 39 zu erzeugen.

Der Antriebslenker 10 ist um die vertikale Schwenkachse 22, die sich koaxial zur Kurbel 20 erstreckt, verschwenkbar an der Kurbel 20 gelagert. Des Weiteren besitzt der Antriebslenker 10 eine bezüglich der Schwenkachse 22 radial abstehende Nase 49. Diese Nase 49 steht dementsprechend distal zum zugehörigen Zweilenkergetriebe 8 vom Antriebslenker 10 ab. Das Gehäuse 5 besitzt nun einen Anschlag 50, an dem die Nase 49 bei Erreichen der Schließstellung gemäß Fig. 3 zur Anlage kommt. Dementsprechend definiert der Anschlag 50 die Schließstellung des Verschlusshakens 2. Zweckmäßig kann nun die Schaltkulisse 39 an einer der Drehachse 21 der Scheibe 38 zugewandten Innenkontur 51 eine Ausnehmung 52 aufweisen, die in den Fig. 4 und 5 erkennbar ist. In diese Ausnehmung 52 taucht die Nase 49 bei Erreichen der Offenstellung des Verstellhakens 2 gemäß Fig. 5 ein.

Die hier vorgestellte Verschlusseinrichtung 1 kommt zweckmäßig bei einem Fahrzeug zum Einsatz, das ein Verdeck aufweist, welches zwischen einer Offenstellung und einer Schließstellung verstellbar ist. Die Verschlusseinrichtung 1 wird dabei zum Verschließen bzw. Verriegeln des Verdecks in dessen Schließstellung verwendet. Dabei können gleichzeitig auch zwei oder mehr derartige Verschlusseinrichtungen zum Einsatz kommen. Beispielsweise kann das Verdeck an einem beim Schließvorgang vorausgehenden vorderen Ende eine Dachkappe aufweisen, an der wenigstens eine solche Verschlusseinrichtung 1 angeordnet ist. Die Dachkappe kommt in der Schließstellung des Verdecks an einem oberen Windschutzscheibenrahmen zur Anlage. Somit greift der Verschlusshaken 2 an einem Bügel oder dergleichen an, der an besagtem Windschutzscheibenrahmen vorgesehen ist. Zweckmäßig ist daher die hier vorgestellte Verschlusseinrichtung 1 verdeckseitig angeordnet. Dies wird durch die in der Horizontalrichtung 18 erzielte flache bzw. kompakte Bauform begünstigt.

## Patentansprüche

1. Verschlusseinrichtung für ein Verdeck eines Fahrzeugs,
- mit einem Verschlusshaken (2), der vorne ein Greifende (3) und hinten ein Lagerende (4) aufweist,
- mit einem Gehäuse (5), in dem das Lagerende (4) in einer Längsrichtung des Verschlusshakens (2) horizontal verstellbar ist,
- mit einer Antriebseinrichtung (7) zum Verstellen des Verschlusshakens (2),
- wobei die Antriebseinrichtung (7) über eine Kopplungseinrichtung (15) mit dem Lagerende (4) des Verschlusshakens (2) antriebsverbunden ist, an welcher das Lagerende (4) des Verschlusshakens (2) um eine quer zur Längsrichtung des Verschlusshakens (2) verlaufende horizontale Schwenkachse (30) verschwenkbar gelagert ist und die am Gehäuse (5) in der Längsrichtung des Verschlusshakens (2) horizontal verstellbar gelagert ist,
- wobei die Kopplungseinrichtung (15) als Kreuzkopf ausgestaltet ist, der einen Kreuzträger (31), an dem das Lagerende (4) des Verschlusshakens (2) um die horizontale Schwenkachse (30) verschwenkbar gelagert ist, und eine Welle (33) aufweist, die um eine vertikale Schwenkachse (14) am Kreuzträger (31) verschwenkbar gelagert ist und mit der die Antriebseinrichtung (7) antriebsverbunden ist,
- wobei die Kopplungseinrichtung (15) zumindest einen Schlitten (34) aufweist, und
- wobei das Gehäuse (5) zumindest eine Führungsschiene (35) aufweist, die sich horizontal in der Längsrichtung des Verschlusshakens (2) erstreckt und in welcher der jeweilige Schlitten (34) verstellbar ist, **dadurch gekennzeichnet,**
- **dass** die Welle (33) am oder im jeweiligen Schlitten (34) um die jeweilige vertikale Schwenkachse (14) verschwenkbar gelagert ist, oder
- **dass** die Welle (33) bezüglich des jeweiligen Schlittens (34) drehfest ist und der jeweilige Schlitten (34) um die jeweilige vertikale Schwenkachse (14) am Gehäuse (5) verschwenkbar gelagert ist,
- wobei insbesondere vorgesehen sein kann, dass die Welle (33) den jeweiligen Schlitten (34) durchsetzt und an einer vom Kreuzträger (31) abgewandten Seite mit der Antriebseinrichtung (7) antriebsverbunden ist,
- wobei insbesondere vorgesehen sein kann, dass die Welle (33) mit dem jeweiligen Schlitten (34) integral aus einem Stück hergestellt ist.

2. Verschlusseinrichtung nach Anspruch 1,
**dadurch gekennzeichnet,**
- **dass** das Gehäuse (5) zwei vertikal voneinander beabstandete Platten (28, 29) aufweist, zwischen denen die Kopplungseinrichtung (15) horizontal verstellbar angeordnet ist,
- **dass** die Führungsschiene (35) in einer solchen Platte (28, 29) ausgebildet ist,
- wobei insbesondere vorgesehen sein kann, dass zwei Führungsschienen (35, 35') vorgesehen sind, die parallel zueinander in je einer dieser Platten (28, 29) ausgebildet sind.

3. Verschlusseinrichtung nach einem der Ansprüche 1 oder 2,
**dadurch gekennzeichnet,**
**dass** das Gehäuse (5) vorne eine nach unten offene Austrittsöffnung (36) für den Verschlusshaken (2) aufweist, durch welche der Verschlusshaken (2) zumindest mit seinem Greifende (3) aus dem Gehäuse (5) herausragt.

4. Verschlusseinrichtung nach einem der Ansprüche 1 bis 3,
**dadurch gekennzeichnet,**
- **dass** die Antriebseinrichtung (7) zumindest ein Zweilenkergetriebe (8), einen mit dem Zweilenkergetriebe (8) antriebsverbundenen Antriebslenker (10) und einen Stellantrieb (11) zum Antreiben des Antriebslenkers (10) aufweist,
- **dass** das Zweilenkergetriebe (8) einen vorderen Lenker (9) aufweist, der vorne um eine vordere vertikale Schwenkachse (13) am Gehäuse (5) schwenkbar gelagert ist,
- **dass** das Zweilenkergetriebe (8) einen hinteren Lenker (12) aufweist, der hinten über die Kopplungseinrichtung (15) mit dem Lagerende (4) des Verschlusshakens (2) antriebsverbunden ist sowie um eine hintere vertikale Schwenkachse (14) an der Kopplungseinrichtung (15) verschwenkbar gelagert ist,
- **dass** die beiden Lenker (9, 12) des Zweilenkergetriebes (8) zwischen ihren Schwenkachsen (13, 14) um eine weitere vertikale Schwenkachse (16) aneinander verschwenkbar gelagert sind,
- **dass** der Antriebslenker (10) an einem der Lenker (9) zwischen dessen Schwenkachsen (13, 16) um eine weitere vertikale Schwenkachse (17) verschwenkbar gelagert ist.

5. Verschlusseinrichtung nach Anspruch 4,
**dadurch gekennzeichnet,**
- **dass** die Antriebseinrichtung (7) ein zweites Zweilenkergetriebe (8') aufweist, das beabstandet zum anderen oder ersten Zweilenkergetriebe (8) am oder im Gehäuse (5) angeordnet ist,
- **dass** die vorderen Lenker (9, 9') der beiden Zweilenkergetriebe (8, 8') koaxial zur vorderen Schwenkachse (13) und/oder die hinteren Lenker (12, 12') der beiden Zweilenkergetriebe (8, 8') koaxial zur hinteren Schwenkachse (14) drehfest miteinander verbunden sind.

6. Verschlusseinrichtung nach einem der Ansprüche 1 bis 5,
**dadurch gekennzeichnet,**
- **dass** eine Sensorik (37) zum Erkennen einer Schließstellung und einer Offenstellung des Verschlusshakens (2) vorgesehen ist,
- **dass** die Antriebseinrichtung (7) einen Antriebslenker (10) und einen Kurbeltrieb (19) zum Antreiben des Antriebslenkers (10) aufweist,
- **dass** der Kurbeltrieb (19) eine um eine vertikale Drehachse (21) drehverstellbare und zur Drehachse (21) exzentrisch angeordnete Kurbel (20) aufweist, die mit dem Antriebslenker (10) antriebsverbunden ist,
- **dass** die Sensorik (37) mit dem Kurbeltrieb (19) zusammenwirkt.

7. Fahrzeug mit einem Fahrzeugverdeck, das zwischen einer Offenstellung und einer Schließstellung verstellbar ist und das in der Schließstellung mittels wenigstens einer Verschlusseinrichtung (1) nach einem der Ansprüche 1 bis 6 verschlossen ist.

## Claims

1. Locking device for a top of a vehicle,
- having a locking hook (2) which has a gripping end (3) at the front and a bearing end (4) at the rear,
- having a housing (5), in which the bearing end (4) can be adjusted horizontally in a longitudinal direction of the locking hook (2),
- having a drive device (7) for adjusting the locking hook (2),
- the drive device (7) being drive-connected to the bearing end (4) of the locking hook (2) via a coupling device (15), on which the bearing end (4) of the locking hook (2) is mounted such that it can be pivoted about a horizontal pivot axis (30) which runs transversely with respect to the longitudinal direction of the locking hook (2), and which coupling device (15) is mounted on the housing (5) such that it can be adjusted horizontally in the longitudinal direction of the locking hook (2),
- the coupling device (15) being configured as a crosshead which has a cross carrier (31), on which the bearing end (4) of the locking hook (2) is mounted such that it can be pivoted about the horizontal pivot axis (30), and a shaft (33) which is mounted such that it can be pivoted about a vertical pivot axis (14) on the cross carrier (31), and to which shaft (33) the drive device (7) is drive-connected,
- the coupling device (15) having at least one slide (34), and
- the housing (5) having at least one guide rail (35) which extends horizontally in the longitudinal direction of the locking hook (2) and in which the respective slide (34) can be adjusted, **characterized**
- **in that** the shaft (33) is mounted on or in the respective slide (34) such that it can be pivoted about the respective vertical pivot axis (14), or
- **in that** the shaft (33) is fixed in terms of rotation with regard to the respective slide (34), and the respective slide (34) is mounted such that it can be pivoted on the housing (5) about the respective vertical pivot axis (14),
- it being possible for there to be provision, in particular, that the shaft (33) penetrates the respective slide (34) and is drive-connected to the drive device (7) on a side which faces away from the cross carrier (31),
- it being possible for there to be provision, in particular, that the shaft (33) with the respective slide (34) is manufactured integrally from one piece.

2. Locking device according to Claim 1, **characterized**
- **in that** the housing (5) has two plates (28, 29) which are spaced apart from one another vertically and between which the coupling device (15) is arranged such that it can be adjusted horizontally, and
- **in that** the guide rail (35) is configured in a plate (28, 29) of this type,
- it being possible for there to be provision, in particular, that two guide rails (35, 35') are provided which are configured parallel to one another in in each case one of the said plates (28, 29).

3. Locking device according to either of Claims 1 and 2, **characterized in that**, at the front, the housing (5) has a downwardly open outlet opening (36) for the locking hook (2), through which outlet opening (36) the locking hook (2) protrudes out of the housing (5) at least with its gripping end (3).

4. Locking device according to one of Claims 1 to 3, **characterized**
- **in that** the drive device (7) has at least one two-link mechanism (8), a drive link (10) which is drive-connected to the two-link mechanism (8), and an actuating drive (11) for driving the drive link (10),
- **in that** the two-link mechanism (8) has a front link (9) which is mounted such that it can be pivoted on the housing (5) at the front about a front vertical pivot axis (13),
- **in that** the two-link mechanism (8) has a rear link (12) which is drive-connected at the rear via the coupling device (15) to the bearing end (4) of the locking hook (2), and is mounted such that it can be pivoted on the coupling device (15) about a rear vertical pivot axis (14),
- **in that** the two links (9, 12) of the two-link mechanism (8) are mounted such that they can be pivoted on one another about a further vertical pivot axis (16) between their pivot axes (13, 14), and
- **in that** the drive link (10) is mounted on one of the links (9) such that it can be pivoted about a further vertical pivot axis (17) between its pivot axes (13, 16).

5. Locking device according to Claim 4, **characterized**
- **in that** the drive device (7) has a second two-link mechanism (8') which is arranged on or in the housing (5) such that it is spaced apart from the other or first two-link mechanism (8), and
- **in that** the front links (9, 9') of the two two-link mechanisms (8, 8') are connected fixedly to one another so as to rotate together coaxially with respect to the front pivot axis (13) and/or the rear links (12, 12') of the two two-link mechanisms (8, 8') are connected fixedly to one another so as to rotate together coaxially with respect to the rear pivot axis (14).

6. Locking device according to one of Claims 1 to 5, **characterized**
- **in that** a sensor system (37) is provided for detecting a closed position and an open position of the locking hook (2),
- **in that** the drive device (7) has a drive link (10) and a crank mechanism (19) for driving the drive link (10),
- **in that** the crank drive (19) has a crank (20) which can be adjusted rotationally about a vertical rotational axis (21), is arranged eccentrically with respect to the rotational axis (21), and is drive-connected to the drive link (10), and
- **in that** the sensor system (37) interacts with the crank drive (19).

7. Vehicle having a vehicle top which can be adjusted between an open position and a closed position, and which is locked by means of at least one locking device (1) according to one of Claims 1 to 6 in the closed position.

## Revendications

1. Dispositif de verrouillage pour une capote de véhicule,
- comprenant un crochet de verrouillage (2) qui présente à l'avant une extrémité de préhension (3) et à l'arrière une extrémité de support (4),
- comprenant un boîtier (5) dans lequel l'extrémité de support (4) peut être déplacée horizontalement dans une direction longitudinale du crochet de verrouillage (2),
- comprenant un dispositif d'entraînement (7) pour déplacer le crochet de verrouillage (2),
- le dispositif d'entraînement (7) étant connecté par entraînement à l'extrémité de support (4) du crochet de verrouillage (2) par le biais d'un dispositif d'accouplement (15) au niveau duquel l'extrémité de support (4) du crochet de verrouillage (2) est supportée de manière à pouvoir pivoter autour d'un axe de pivotement horizontal (30) s'étendant transversalement à la direction longitudinale du crochet de verrouillage (2) et qui est supporté de manière déplaçable horizontalement sur le boîtier (5) dans la direction longitudinale du crochet de verrouillage (2),
- le dispositif d'accouplement (15) étant réalisé sous forme de tête cruciforme qui présente un support cruciforme (31) au niveau duquel l'extrémité de support (4) du crochet de verrouillage (2) est supportée de manière à pouvoir pivoter autour de l'axe de pivotement horizontal (30), et un arbre (33) qui est supporté de manière à pouvoir pivoter autour d'un axe de pivotement vertical (14) sur le support cruciforme (31) et avec lequel le dispositif d'entraînement (7) est connecté par entraînement,
- le dispositif d'accouplement (15) présentant au moins un chariot (34) et
- le boîtier (5) présentant au moins un rail de guidage (35) qui s'étend horizontalement dans la direction longitudinale du crochet de verrouillage (2) et dans lequel peut être déplacé le chariot respectif (34), **caractérisé en ce que**
- l'arbre (33) est supporté de manière à pouvoir pivoter autour de l'axe de pivotement vertical respectif (14) sur ou dans le chariot respectif (34), ou
- l'arbre (33) est solidaire en rotation par rapport au chariot respectif (34) et le chariot respectif (34) est supporté de manière à pouvoir pivoter autour de l'axe de pivotement vertical respectif (14) sur le boîtier (5),
- l'arbre (33) pouvant notamment traverser le chariot respectif (34) et pouvant être connecté par entraînement au dispositif d'entraînement (7) au niveau d'un côté opposé au support cruciforme (31),
- l'arbre (33) pouvant notamment être fabriqué d'une seule pièce intégralement avec le chariot respectif (34).

2. Dispositif de verrouillage selon la revendication 1, **caractérisé en ce que**
- le boîtier (5) présente deux plaques espacées verticalement l'une de l'autre (28, 29) entre lesquelles le dispositif d'accouplement (15) est disposé de manière à pouvoir être déplacé horizontalement,
- le rail de guidage (35) est réalisé dans une telle plaque (28, 29),
- deux rails de guidage (35, 35') pouvant notamment être prévus, lesquels sont réalisés parallèlement l'un à l'autre dans chacune de ces plaques (28, 29).

3. Dispositif de verrouillage selon l'une quelconque des revendications 1 ou 2, **caractérisé en ce que** le boîtier (5) présente à l'avant une ouverture de sortie ouverte vers le bas (36) pour le crochet de verrouillage (2), à travers laquelle le crochet de verrouillage (2) fait saillie au moins avec son extrémité de préhension (3) hors du boîtier (5).

4. Dispositif de verrouillage selon l'une quelconque des revendications 1 à 3, **caractérisé en ce que**
- le dispositif d'entraînement (7) présente au moins un mécanisme à deux bras oscillants (8), un bras oscillant d'entraînement (10) connecté par entraînement au mécanisme à deux bras oscillants (8) et un entraînement de commande (11) pour entraîner le bras oscillant d'entraînement (10),
- le mécanisme à deux bras oscillants (8) présente un bras oscillant avant (9) qui est supporté à l'avant de manière à pouvoir pivoter autour d'un axe de pivotement vertical avant (13) sur le boîtier (5),
- le mécanisme à deux bras oscillants (8) présente un bras oscillant arrière (12) qui est connecté par entraînement à l'arrière par le biais du dispositif d'accouplement (15) à l'extrémité de support (4) du crochet de verrouillage (2) et qui est supporté sur le dispositif d'accouplement (15) de manière à pouvoir pivoter autour d'un axe de pivotement vertical arrière (14),
- les deux bras oscillants (9, 12) du mécanisme de bras oscillant (8) sont supportés de manière à pouvoir pivoter l'un contre l'autre autour d'un axe de pivotement vertical supplémentaire (16) entre leurs axes de pivotement (13, 14),
- le bras oscillant d'entraînement (10) est supporté sur l'un des bras oscillants (9) entre ses axes de pivotement (13, 16) de manière à pouvoir pivoter autour d'un axe de pivotement vertical supplémentaire (17).

5. Dispositif de verrouillage selon la revendication 4, **caractérisé en ce que**
- le dispositif d'entraînement (7) présente un deuxième mécanisme à deux bras oscillants (8') qui est disposé à distance de l'autre, ou du premier, mécanisme à deux bras oscillants (8) sur ou dans le boîtier (5),
- les bras oscillants avant (9, 9') des deux mécanismes à deux bras oscillants (8, 8') sont connectés de manière solidaire en rotation l'un à l'autre coaxialement à l'axe de pivotement avant (13) et/ou les bras oscillants arrière (12, 12') des deux mécanismes à deux bras oscillants (8, 8') sont connectés l'un à l'autre de manière solidaire en rotation coaxialement à l'axe de pivotement arrière (14).

6. Dispositif de verrouillage selon l'une quelconque des revendications 1 à 5, **caractérisé en ce que**
- un système de capteur (37) est prévu pour détecter une position de fermeture et une position d'ouverture du crochet de verrouillage (2),
- le dispositif d'entraînement (7) présente un bras oscillant d'entraînement (10) et un entraînement à manivelle (19) pour entraîner le bras oscillant d'entraînement (10),
- l'entraînement à manivelle (19) présente une manivelle (20) pouvant être déplacée par rotation autour d'un axe de rotation vertical (21) et disposée de manière excentrique par rapport à l'axe de rotation (21), qui est connecté par entraînement au bras oscillant d'entraînement (10),
- le système de capteur (37) coopère avec l'entraînement à manivelle (19).

7. Véhicule comprenant une capote de véhicule qui peut être déplacée entre une position d'ouverture et une position de fermeture et qui, dans la position de fermeture, est fermée au moyen d'au moins un dispositif de verrouillage (1) selon l'une quelconque des revendications 1 à 6.
